# FASCICULE DE BREVET EUROPEEN

(11) **EP 3 942 838 B1**
(45) Date de publication et mention de la délivrance du brevet: **25.02.2026**
(21) Numéro de dépôt: 20728105.6
(22) Date de dépôt: 17.03.2020
(51) Int. Cl.: H04N 21/44, H04N 21/81, H04N 21/845, H04N 21/2343, H04N 21/43, H04N 21/262

(54) **PROCÉDÉ DE GESTION DE DISTRIBUTION DE CONTENUS MULTIMÉDIA ET DISPOSITIF POUR LA MISE EN OEUVRE DU PROCÉDÉ**
VERFAHREN ZUR VERWALTUNG DES SENDENS VON MULTIMEDIAINHALT UND VORRICHTUNG ZUR DURCHFÜHRUNG DES BESAGTEN VERFAHRENS
METHOD FOR MANAGING THE BROADCASTING OF MULTIMEDIA CONTENT, AND DEVICE FOR CARRYING OUT SAID METHOD

(30) Priorité: 18.03.2019 FR 1902766
(43) Date de publication de la demande: 26.01.2022
(73) Titulaire: ATEME, 78140 Velizy Villacoublay (FR); Institut Mines Telecom, 91120 Palaiseau (FR)
(72) Inventeur: TOULLEC, Eric, 35000 RENNES (FR); GREGORY, Lucas, 35000 RENNES (FR); LE FEUVRE, Jean, 91940 GOMETZ LE CHATEL (FR)
(74) Mandataire: Plasseraud IP
(86) Numéro de dépôt international: PCT/FR2020/050580
(87) Numéro de publication internationale: WO 2020/188219

(56) Documents cités:
- "Technologies under Consideration for DASH", no. n17812, 20 July 2018 (2018-07-20), XP030197563, Retrieved from the Internet <URL:http://phenix.int-evry.fr/mpeg/doc_end_user/documents/123_Ljubljana/wg11/w17812.zip w17812-DASH_TuC.docx> [retrieved on 20180720]
- IRAJ SODAGAR: "[CAPCO] Proposal: MPD chaining for pre/mid rolls", 113. MPEG MEETING; 19-10-2015 - 23-10-2015; GENEVA; (MOTION PICTURE EXPERT GROUP OR ISO/IEC JTC1/SC29/WG11),, no. m37084, 14 October 2015 (2015-10-14), XP030065452
- QUALCOMM INCORPORATED: "eDASH: Server-based Ad Insertion based on DASH-IF", vol. SA WG4, no. Bratislava, Slovakia; 20150413 - 20150417, 15 April 2015 (2015-04-15), XP050964003, Retrieved from the Internet <URL:http://www.3gpp.org/ftp/tsg_sa/WG4_CODEC/TSGS4_83/Docs/> [retrieved on 20150415]

## Description

### Domaine et contexte de l'invention

La présente invention se rapporte au domaine de la distribution de données sur un réseau de télécommunication. En particulier, elle se rapporte à la distribution de contenus multimédia (audio et/ou vidéo, sous-titres, données, etc.), et notamment à la distribution en temps réel.

Le monde de la distribution ou distribution (en anglais, « broadcast ») de la télévision numérique a connu de véritables mutations au cours de ces dernières années. A la distribution traditionnelle réalisée en mode dynamique via des opérateurs de télévision payante (ex. bouquets numériques et/ou fournisseurs d'accès Internet (FAI)) pour la télévision dite linéaire (ADSL (de l'anglais Asymmetric Digital Subscriber Line), Satellite, Câble, IPTV, Fibre, Télévision Numérique Terrestre (TNT), etc.), se sont ajoutés de nouveaux services audiovisuels tels que la vidéo à la demande (VOD, de l'anglais « Video On Demand »), ou la télévision de rattrapage (en anglais « Catch-Up TV » ou « Replay »).

La conception de nouveaux terminaux toujours plus puissants et plus mobiles, la demande croissante de consommation de contenus indépendants de l'emplacement du consommateurs (en anglais «TV everywhere »), ainsi que le développement d'infrastructures réseaux offrant toujours plus de bande passante, ont conduit à l'émergence d'un nouveau marché ne nécessitant pas de posséder le réseau d'accès vers les utilisateurs, et appelé service par contournement (OTT, de l'anglais « Over-The-Top »). Le marché OTT opère sur des réseaux dits non managés (i.e. avec bande passante et qualité de service (en anglais QoS, pour « Quality of Service ») non assurées). Ces services OTT multi-écrans sont fournis par les compagnies de distribution/redistribution que sont les diffuseurs de contenus télévisuels et les opérateurs télécoms.

Les infrastructures de distribution sont ainsi aujourd'hui doublées, une pour le broadcast traditionnel et une (au moins) pour la distribution OTT.

Afin d'adresser les services de distribution de contenus multi-écrans, divers protocoles ont été développés : Apple HLS (HTTP Live Streaming), Microsoft Smooth Streaming (MSS), Adobe HTTP Dynamic Streaming (HDS), MPEG Dynamic Adaptive Streaming over HTTP (MPEG-DASH). Tous ces protocoles sont basés sur le concept de streaming adaptatif http (en anglais HAS, pour « HTTP Adaptive Streaming »).

La distribution de contenus multi-écrans utilise typiquement une tête de réseau de distribution vidéo comprenant une unité d'encodage vidéo qui reçoit en entrée des contenus à encoder et délivre à une unité de mise en forme (parfois dénommée en anglais « packager ») des flux encodés dits « flux élémentaires ». Un contenu reçu en entrée est encodé selon une pluralité de profils d'encodage (un profil étant par exemple défini avec des paramètres de codec, de résolution et de débit).

Les flux encodés (flux élémentaires) délivrés par l'unité d'encodage vidéo sont découpés au sein de l'unité de mise en forme en au moins deux séquences de segments successifs, respectivement audio et vidéo, les segments étant généralement de durée fixe (typiquement de quelques secondes), dont le format dépend du protocole choisi (par exemple MPEG2-TS, MP4, etc.). Pour chaque contenu, un ensemble de métadonnées relatives à des contenus multimédias, parfois appelé conteneur de présentation de media (de l'anglais « Media Presentation Description », ou MPD) ou « manifeste » (de l'anglais « manifest »), est aussi généré par l'unité de mise en forme, par exemple sous forme d'un fichier, par exemple au format XML, indiquant les caractéristiques de chaque profil et les segments disponibles correspondant au contenu.

Ces manifestes et les segments associés sont fournis par l'unité de mise en forme à un serveur de contenus, puis stockés sur des réseaux de distribution de contenus, appelés « CDN » (de l'anglais « Content Delivery Network »), fournissant des capacités de cache qui permettent d'améliorer la qualité des services, et de minimiser les temps d'accès et la latence pour la visualisation de contenus par des terminaux de lecture.

Un terminal de lecture vidéo de contenus distribués en mode dynamique (par exemple configuré au sein d'un équipement utilisateur tel qu'un smartphone, une tablette ou un tout autre type d'ordinateur), autrement dit un contenu vidéo de type dynamique, ou « live » (par opposition à un contenu de type statique, comme par exemple un contenu de VOD), sera typiquement configuré pour lire ce contenu en utilisant les informations contenues dans le manifeste associé au contenu.

La mise en œuvre d'une lecture de contenu multimédia « live », c'est-à-dire distribué en mode dynamique, sur la base du manifeste associé présente toutefois des limitations, eu égard à certains nouveaux cas d'usage impliquant un basculement d'un premier contenu live en cours de lecture vers un deuxième contenu live. En effet, les mécanismes existants permettant d'effectuer un basculement d'un premier contenu multimédia vers un deuxième contenu multimédia ne permettent pas de gérer de manière satisfaisante ces nouveaux cas d'usage.
Le document intitulé « Technologies under Consideration for DASH » 123. MPEG Meeting, n°17812, XP030197563, décrit différentes technologies envisagées pour la spécification du protocole DASH pour pour faire du chaînage de MDP pour l'accès à un deuxième contenu multimédia (Mid-Roll Ads).
Le document « [CAPCO] Proposal : MPD chaining for pre/mid rolls", de Iraj Sodagar et al., 113. MPEG Meeting, décrit un procédé proposé de chainage de MPDs pour traiter les cas d'usage de type « Pre-Roll » et « Mid-Roll ».
Le document « eDASH: Server-based Ad Insertion based on DASH-IF", de Qualcomm Incorporated, vol. SA WG4, no. Bratislava, Slovakia décrit un procédé d'insertion de publicité utilisant la technologie DASH.

L'invention a pour but d'améliorer la situation.

Selon un premier aspect, un procédé de gestion de contenus multimédia est proposé comme défini par les revendications. Le procédé comprend, dans un ou plusieurs modes de réalisation: obtenir un premier ensemble de métadonnées de description de contenu décrivant un premier contenu multimédia distribué en mode dynamique ; et sur lecture dans le premier ensemble de métadonnées de données de redirection vers une section d'un deuxième ensemble de métadonnées de description de contenu, lire dans la section du deuxième ensemble de métadonnées des données relatives à une synchronisation temporelle pour l'accès à un deuxième contenu multimédia distribué en mode dynamique, les premier et deuxième ensembles de métadonnées étant des manifestes au format « Dynamic adaptative streaming over HTTP » (Hypertext Transfer Protocol), DASH.

Le procédé proposé permet avantageusement d'utiliser des données de redirection pour effectuer un basculement d'un premier contenu multimédia distribué en mode dynamique vers un deuxième contenu multimédia distribué en mode dynamique, sur la base d'un seul ensemble de métadonnées de description de contenu dans lequel les données de redirection sont insérées.

Par exemple, dans le cadre de la troisième édition de la spécification ISO/IEC 23009-1 (« Information technology - Dynamic adaptative streaming over http (DASH) - Part 1 : Media presentation description and segment formats »), qui prévoit la possibilité d'utiliser des données de redirection sous la forme d'un lien « xlink » insérable dans un conteneur d'intervalle de temps d'un manifeste (qui correspond à un ensemble de métadonnées de description de contenu), un lien xlink ne peut être utilisé pour effectuer un basculement en lecture d'un premier contenu distribué en mode dynamique vers un deuxième contenu distribué en mode dynamique. Le procédé proposé prévoit de modifier l'utilisation des liens xlink en insérant dans la résolution d'un tel lien une lecture de données de synchronisation temporelle pour l'accès au deuxième contenu distribué en mode dynamique.

Ainsi, le procédé proposé permet avantageusement d'insérer dans la résolution de données de redirection, c'est-à-dire, dans l'obtention des données auxquelles la redirection donne accès, l'accès à des données de synchronisation temporelle pour l'accès au deuxième contenu distribué en mode dynamique.

Cela permet, dans le cas des liens xlink spécifié dans le standard DASH, d'élargir considérablement les cas d'utilisation de ce type de lien, en bénéficiant plus largement des avantages qu'ils procurent, notamment en ce qu'ils permettent un basculement en lecture entre deux contenus, éventuellement tous deux distribués en mode dynamique, sans changer de manifeste en cours de lecture pour l'accès aux contenus.

Le procédé proposé convient particulièrement bien, bien que de façon non limitative, pour la lecture, par un équipement terminal de lecture, de contenus multimédia distribués en live selon un schéma de type MPEG DASH, HLS, HDS, MSS, ou HAS. Mais il convient aussi pour la lecture de contenus multimédia distribués en live selon tout schéma dans lequel cette lecture est effectuée en utilisant des ensemble de métadonnées de description de contenu correspondant à des contenus multimédia distribués en live.

Le procédé proposé pourra avantageusement être mis en œuvre dans tout dispositif configuré pour la lecture de contenus multimédia, sur la base d'un ensemble de métadonnées de description de contenu multimédia, par exemple conformément aux standards MPEG DASH, HLS, HDS, MSS, ou HAS, tels que, de façon non limitative, tout ordinateur, smartphone, équipement utilisateur, lecteur vidéo, terminal de lecture vidéo, tablette, etc.

Dans un ou plusieurs modes de réalisation, le deuxième ensemble de métadonnées de description de contenu pourra décrire le deuxième contenu multimédia distribué en mode dynamique.

Dans un ou plusieurs modes de réalisation, les données relatives à une synchronisation temporelle pour l'accès au deuxième contenu multimédia distribué en mode dynamique peuvent être lues, dans le deuxième ensemble de métadonnées de description de contenu, dans un conteneur de description d'intervalle de temps relatif au deuxième contenu multimédia.

Dans un ou plusieurs modes de réalisation, les données relatives à une synchronisation temporelle pour l'accès au deuxième contenu multimédia distribué en mode dynamique peuvent comprendre des données indiquant un horodatage de disponibilité du deuxième contenu multimédia.

Dans un ou plusieurs modes de réalisation, les données relatives à une synchronisation temporelle pour l'accès au deuxième contenu multimédia distribué en mode dynamique peuvent comprendre des données indiquant une information d'accessibilité de segments du deuxième contenu multimédia.

Dans un ou plusieurs modes de réalisation, les données relatives à une synchronisation temporelle pour l'accès au deuxième contenu multimédia distribué en mode dynamique peuvent correspondre, en tout ou partie, à des données relatives à une synchronisation temporelle fournies sous un élément racine du deuxième ensemble de métadonnées.

Dans un ou plusieurs modes de réalisation, les données relatives à une synchronisation temporelle pour l'accès au deuxième contenu multimédia distribué en mode dynamique pourront comprendre des données indiquant un horodatage de disponibilité d'un premier segment du deuxième contenu, des données indiquant une durée commune utilisée dans la définition de débits associés au deuxième contenu et des données indiquant un horodatage de génération du deuxième ensemble de métadonnées et de sa publication sur un réseau de distribution de contenus multimédia. Dans un ou plusieurs modes de réalisation, ces données peuvent en outre comprendre l'un ou plusieurs parmi des données indiquant un type de distribution du deuxième contenu, des données indiquant un horodatage de génération d'un segment du deuxième contenu le plus ancien encore disponible, des données d'horloge et des données indiquant une durée d'un plus petit tampon de décalage temporel utilisé pour le deuxième contenu.

Selon un deuxième aspect, il est proposé un dispositif de lecture de contenu multimédia, comprenant un processeur et une mémoire couplée de manière opérationnelle au processeur, dans lequel le processeur est configuré pour la mise en œuvre du procédé proposé selon un ou plusieurs modes de réalisation.

Selon un autre aspect, il est proposé un procédé de gestion de contenus multimédia, comprenant : obtenir un premier ensemble de métadonnées de description de contenu décrivant un premier contenu multimédia distribué en mode dynamique ; et sur lecture dans le premier ensemble de métadonnées de données de redirection vers une section d'un deuxième ensemble de métadonnées de description de contenu, lire dans la section du deuxième ensemble de métadonnées des données relatives à une synchronisation temporelle pour l'accès à un deuxième contenu multimédia distribué en mode dynamique correspondant au deuxième ensemble de métadonnées de description de contenu.

Selon un autre aspect, il est proposé un procédé de gestion de contenus multimédia, comprenant : lire, sur la base d'un lien de redirection dans un premier ensemble de métadonnées de description de contenu décrivant un premier contenu multimédia distribué en mode dynamique, dans une section prédéfinie d'un deuxième ensemble de métadonnées de description du contenu, des données relatives à une synchronisation temporelle pour l'accès à un deuxième contenu multimédia distribué en mode dynamique correspondant au deuxième ensemble de métadonnées de description de contenu.

Selon un autre aspect, il est proposé un ensemble de métadonnées de description de contenu décrivant un contenu multimédia distribué en mode dynamique, comprenant, dans un conteneur décrivant un intervalle de temps, des données relatives à une synchronisation temporelle pour l'accès au contenu multimédia.

Selon un autre aspect, il est proposé un manifeste au format DASH décrivant un contenu multimédia distribué en mode dynamique, comprenant, dans un conteneur de type « Period », des données relatives à une synchronisation temporelle pour l'accès au contenu multimédia.

Selon un autre aspect, il est proposé un programme d'ordinateur, chargeable dans une mémoire associée à un processeur, et comprenant des portions de code pour la mise en œuvre du procédé proposé selon un ou plusieurs modes de réalisation lors de l'exécution dudit programme par le processeur, ainsi qu'un ensemble de données représentant, par exemple par voie de compression ou d'encodage, ledit programme d'ordinateur.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à gérer un contenu multimédia selon un ou plusieurs modes de réalisation du procédé proposé.

### Brève description des dessins

D'autres particularités et avantages de la présente invention apparaîtront dans la description ci-après d'exemples de réalisation non limitatifs, en référence aux dessins annexés, dans lesquels :
**Fig. 1**
   [fig.1]
   illustre un exemple d'infrastructure de distribution selon un ou plusieurs modes de réalisation.
**Fig. 2a**
   [fig.2a]
   illustre un exemple d'ensemble de métadonnées de description de contenus (ou manifeste).
**Fig. 2b**
   [fig.2b]
   illustre un exemple d'ensemble de métadonnées de description de contenus (ou manifeste).
**Fig. 3**
   [fig.3]
   présente le procédé de calcul du segment à télécharger dans le cas d'un contenu multimédia distribué en mode dynamique.
**Fig. 4**
   [fig.4]
   illustre le procédé proposé selon un ou plusieurs modes de réalisation.
**Fig. 5**
   [fig.5]
   illustre le procédé proposé selon un ou plusieurs modes de réalisation.
**Fig. 6a**
   [fig.6a]
   illustre un exemple d'ensemble de métadonnées de description de contenus (ou manifeste).
**Fig. 6b**
   [fig.6b]
   illustre un exemple d'ensemble de métadonnées de description de contenus (ou manifeste).
**Fig. 6c**
   [fig.6c]
   illustre un exemple d'ensemble de métadonnées de description de contenus (ou manifeste).
**Fig. 6d**
   [fig.6d]
   est un diagramme temporel illustrant un décrochage d'un premier contenu live vers un deuxième contenu live.
**Fig. 7**
   [fig.7]
   illustre un exemple d'architecture de dispositif pour la mise en œuvre du procédé proposé selon un ou plusieurs modes de réalisation.

### Description détaillée

Dans la description détaillée ci-après de modes de réalisation du procédé, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

La présente description fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans la présente description tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Par contenu multimédia, on entend dans la présente description tout contenu audio et/ou vidéo, sous-titres, données, audiovisuel, musique, son, image et interface graphique interactive, et toute combinaison de ces types de contenu.

Les termes «réseau» et «réseau de communication» tels qu'utilisés dans la présente description font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre inter-opérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans la présente description font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente description. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes «application» ou «programme applicatif» (AP) et leurs variantes («app», «webapp», etc.) tels qu'utilisés dans la présente description correspondent à tout outil qui fonctionne et est opéré au moyen d'un ordinateur, pour fournir ou exécuter une ou plusieurs fonction(s) ou tâche(s) pour un utilisateur ou un autre programme applicatif. Pour interagir avec un programme applicatif, et le contrôler, une interface utilisateur peut être fournie sur l'équipement sur lequel le programme applicatif est mis en œuvre. Par exemple, une interface graphique (en anglais, «graphical user interface» ou GUI) peut être générée et affichée sur un écran de l'équipement utilisateur, ou une interface utilisateur audio peut être restituée à l'utilisateur en utilisant un haut-parleur, un casque ou une sortie audio.

Les termes « contenu multimédia » tel qu'utilisés dans la présente description correspondent à tout contenu de type audio et/ou vidéo ou audiovisuel.

Dans la présente description, les termes distribution « en temps-réel », distribution « en mode linéaire », distribution « en mode TV linéaire », distribution « en mode dynamique » et distribution « live » ou « en mode live » sont utilisés de manière interchangeable pour désigner la distribution en mode ou de type dynamique (en anglais mode « live » ou « dynamic ») d'un contenu multimédia dans un système de distribution de contenus vers des terminaux, comprenant notamment la distribution du contenu à mesure que celui-ci est généré, par opposition à la distribution d'un contenu précédemment généré, sur requête d'accès d'un utilisateur (distribution sur requête d'accès ou distribution en mode ou de type « statique » - en anglais, « static »), tel que, par exemple, un contenu enregistré sur un serveur, et rendu disponible à des utilisateurs par un service de vidéo à la demande (VOD).

Dans la présente description, les termes « contenu live » font référence à un contenu, par exemple de type multimédia, distribué, par exemple selon un mode de distribution OTT, en mode dynamique (par opposition au mode statique de distribution). Un contenu live sera typiquement généré par une chaîne de télévision, ou par tout type de média télévisuel, et pourra être par ailleurs diffusé sur un réseau de diffusion de contenus multimédia, outre sa mise à disposition sur des serveurs de contenus dans un système de distribution OTT.

Dans la présente description, les termes « terminal », « équipement utilisateur », « lecteur », « dispositif de lecture », « terminal de lecture » et « lecteur vidéo » sont utilisés de manière interchangeable pour désigner tout type de dispositif, mis en œuvre par un ou plusieurs logiciels, un ou plusieurs matériels, ou une combinaison d'un ou plusieurs logiciels et d'un ou plusieurs matériels, configuré pour utiliser un contenu multimédia distribué selon un protocole de distribution multi-écrans, notamment en chargement et en lecture du contenu. Les termes « client » et « client de lecture vidéo » sont aussi utilisés de manière interchangeable pour désigner tout type de dispositif, logiciel et/ou matériel, ou toute fonction ou ensemble de fonctions, mise(s) en œuvre par logiciel et/ou matériel au sein d'un dispositif, configurés pour utiliser un contenu multimédia distribué selon un protocole de distribution multi-écrans, notamment en chargement du contenu depuis un serveur et en lecture du contenu.

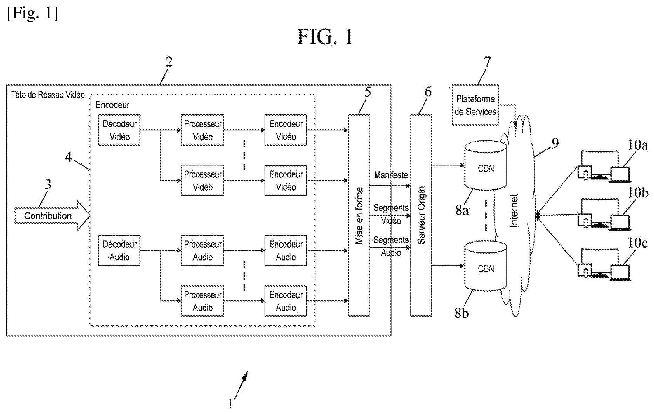

La figure 1 illustre un exemple d'architecture de système de distribution (1) de contenus multimédia, dans lequel le procédé proposé peut être mis en œuvre. La figure 1 montre une tête de réseau de distribution vidéo (2) comprenant une unité d'encodage vidéo (4) qui reçoit en entrée des contenus à encoder (« contribution ») (3), et délivre à une unité de mise en forme (5) (« packager ») des flux encodés dits « flux élémentaires ». Comme illustré sur la figure 1, un contenu reçu en entrée est encodé selon une pluralité de profils d'encodage (un profil étant par exemple défini avec des paramètres de codec, de résolution et de débit). L'utilisation d'une pluralité de profils d'encodage présente au moins deux avantages : Tout d'abord, une pluralité de profils permet d'adresser des terminaux de lecture aux caractéristiques (codecs supportés, résolution d'écran, puissance de décodage) différentes. En outre, elle offre aux lecteurs vidéo de ces terminaux la possibilité de s'adapter en fonction de la bande passante réseau disponible. En effet, le lecteur d'un client (d'un terminal) pourra être configuré pour chercher à atteindre le profil d'encodage correspondant au plus haut débit, en fonction des mesures de bande passante qu'il effectue en permanence.

Les flux encodés (flux élémentaires) délivrés par l'unité d'encodage vidéo (4) à l'unité de mise en forme sont découpés en deux séquences de segments successifs, respectivement audio et vidéo, qui sont généralement de durée fixe (typiquement de quelques secondes) par l'unité de mise en forme (5), dont le format dépend du protocole choisi (par exemple MPEG2-TS, MP4, etc.). Pour chaque contenu, un ensemble de métadonnées relatives à des contenus multimédias, ou manifeste (en anglais « manifest »), est aussi généré par l'unité de mise en forme. Il s'agit typiquement d'un fichier, par exemple au format XML, indiquant les caractéristiques de chaque profil et les segments disponibles correspondant au contenu.

Ces manifestes et les segments associés sont fournis par l'unité de mise en forme (5) à un serveur de contenus (6) (« Origin Server » sur la figure 1), puis stockés sur des serveurs de distribution de contenu (8a, 8b), appelés « CDN » (de l'anglais « Content Delivery Network »), fournissant des capacités de cache qui permettent d'améliorer la qualité des services fournis aux utilisateurs, et de minimiser les temps d'accès et la latence pour la visualisation de contenus par des terminaux de lecture.

Les contenus stockés dans les serveurs CDN (8a, 8b) sont accessibles en lecture à des terminaux (10a, 10b, 10c) utilisateurs, par le biais d'une plateforme de services (7) pour la distribution des contenus. Les clients installés dans les terminaux (10a, 10b, 10c) peuvent accéder aux contenus stockés sur les serveurs CDN par l'intermédiaire d'un ou plusieurs réseaux de communication de données, comme par exemple le réseau Internet (9), comme illustré sur la figure.

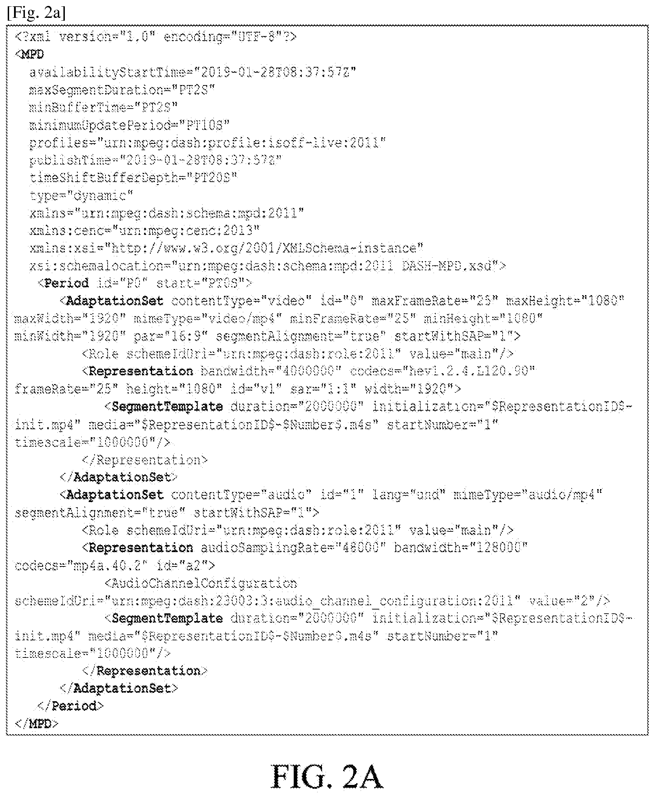

La figure 2a illustre un exemple de contenu de fichier XML correspondant à un manifeste utilisant le format DASH (ou MPEG-DASH). Un manifeste de ce type présente une arborescence de conteneurs XML imbriqués, comme illustré par la figure 2a. Bien que la présente description fournisse des exemples de modes de réalisation basés sur le format DASH spécifié dans la troisième édition du document ISO/IEC 23009-1 « Information Technology - Dynamic adaptive streaming over HTTP (DASH) - Part 1 : Media presentation description and segment formats », l'homme du métier peut se rendre compte que les procédés proposés ne sont pas limités à un type ou un format particulier de manifeste (ou d'ensemble de métadonnées de description de contenu(s) multimédia), et qu'ils s'appliquent à tous types de manifeste, tels que des manifestes utilisant d'autres protocoles et formats de distribution OTT, comme par exemple les protocoles et formats HLS, MSS et HDS mentionnés ci-dessus.

Le manifeste DASH illustré sur la figure 2a présente une structure hiérarchique organisée selon l'arborescence suivante:
Un élément racine du document (de l'anglais Media Presentation Description, MPD) contient les attributs applicables à l'ensemble des éléments du document (les autres éléments étant parfois dénommés éléments « enfants »).

La racine « MPD » peut, outre des éléments « enfants », définir des valeurs d'attributs, parmi lesquels les attributs suivants qui sont relatifs à la distribution d'un contenu live :
L'attribut « type » définit le type de distribution du contenu: « static » pour les contenus distribués en mode statique (typiquement les contenus distribués selon un service de Vidéo à la Demande (VOD)) et « dynamic » pour les contenus distribués en mode dynamique.

L'attribut « AvailabilityStartTime », se rapportant au mode de distribution dynamique, définit la date (par exemple au format temps universel coordonné (en anglais « UTC », pour « Coordinated Universal Time »)) de disponibilité du premier segment généré pour le service courant. Cette information peut être utilisée pour indiquer l'heure de démarrage du service, de manière à être utilisée par un terminal de lecture comme point d'ancrage temporel du début du service.

L'attribut « PublishTime » indique une date de génération du manifeste et de sa publication sur le réseau CDN. Cette information permet d'enregistrer différentes versions d'un même manifeste correspondant à des publications successives, afin de détecter des changements intervenus d'une publication à l'autre.

L'attribut « AvailabilityEndTime » indique une date de génération du segment le plus ancien encore disponible.

L'attribut « MinimumUpdatePeriod » définit la période la plus courte entre des changements potentiels dans le MPD. La valeur de cet attribut peut être utilisée par le terminal de lecture du contenu pour configurer une fréquence à laquelle il télécharge le manifeste, étant informé du fait que le manifeste sera mis à jour par l'unité de mise en forme au moins à la fréquence indiquée par cet attribut.

L'attribut « MinBufferTime », obligatoire dans l'exemple de format illustré par la Figure 2a, définit une durée commune utilisée dans la définition des débits des représentations.

L'attribut « TimeShiftBufferDepth » définit la durée du plus petit buffer de décalage temporel pour toutes les représentations du manifeste, garantissant la disponibilité des segments pour les distributions de type dynamique. Sa valeur indique la période dans le passé pour laquelle le contenu associé au manifeste, distribué en mode dynamique, est disponible sur le serveur CDN. Cette valeur peut par exemple être égale à 1 minute, auquel cas le lecteur peut revenir dans le passé (du contenu « live ») pendant une minute, ou récupérer une minute de contenu live dans le cas où l'utilisateur utilise la fonction « pause » pour interrompre la lecture du contenu live.

L'attribut « SuggestedPresentationDelay » définit un décalage fixe dans le temps qui peut être appliqué lors de la présentation de chaque access unit. Ce paramètre permet de se caler le plus près possible de la limite du contenu live, pour s'assurer que tous les terminaux de lecture qui lisent le même contenu live vont le lire au même endroit. Par exemple, on peut configurer la lecture de manière à revenir 4 secondes dans le passé pour se donner une marge de sécurité par rapport au déroulement du contenu live.

L'attribut « UTCTiming » fournit une horloge commune entre l'unité de mise en forme et le terminal de lecture (ou lecteur vidéo). Il permet d'indiquer au terminal un moyen permettant de récupérer une horloge synchronisée avec le serveur de contenus.

Des éléments « enfants », sous forme de conteneurs éventuellement imbriqués les uns dans les autres, peuvent en outre être inclus dans le manifeste pour préciser les fichiers accessibles par l'intermédiaire du manifeste. En référence à la figure 2a, ces éléments « enfants » peuvent être :

Un élément de type « Period », décrivant un intervalle de temps, borné ou non dans le temps. Un ou plusieurs attributs peuvent être fournis pour un élément de type « Period », parmi lesquels un attribut (« id ») d'identification de période (« id= « P0 » » sur la figure 2a), un attribut (« start ») de temps de démarrage de période (« start= « PTOS » » sur la figure 2a), et un attribut (« duration ») de durée de période (non présent pour une période ouverte, c'est-à-dire non encore terminée). La valeur de l'attribut de temps de démarrage de période (0 secondes dans l'exemple illustré sur la figure 2a) pourra être combinée avec la valeur de l'élément « availabilityStartTime » décrit ci-dessus)

Chaque élément enfant de type « Period » peut lui-même contenir des éléments enfants. Par exemple, comme illustré sur la figure 2a, un élément de type « Period » peut contenir deux éléments enfants de type « AdaptationSet » correspondant chacun à un type de contenu.

L'élément de type « AdaptationSet » est un conteneur qui permet de décrire des contenus disponibles en fonction de leur type. Il permet de regrouper des éléments concernant la même composante d'un contenu multimédia de types audio, vidéo ou sous-titres, mais encodés avec des paramètres (débits, résolutions, taux d'image (en anglais « framerate »), taux d'échantillonnage (en anglais « sample rate »)) différents. Dans l'exemple de la figure 2a, un seul profil d'encodage est disponible, et ce profil est décrit pour sa composante vidéo (contentType="video" id="0" maxFrameRate="25" maxHeight="1080" maxWidth="1920" mimeType="video/mp4" minFrameRate="25" minHeight="1080" minWidth="1920" par="16:9" segmentAlignment="true" startWithSAP="1") et pour sa composante audio (contentType="audio" id="1" lang="und" mimeType="audio/mp4" segmentAlignment="true" startWithSAP="1"). Un lecteur vidéo peut ainsi, par exemple, obtenir rapidement les paramètres de profil d'encodage vidéo utilisés pour l'encodage du contenu décrit dans le manifeste illustré sur la figure 2a : bande passante, paramètres du codeur vidéo, taux d'images, résolution, format des images, etc. (« bandwidth="4000000" codecs="hev1.2.4.L120.90" frameRate="25" height=" 1080" id="v1" sar=" 1:1" width="1920"").

Des paramètres d'encodage peuvent être fournis par l'élément « Representation », qui permet de décrire précisément les paramètres d'encodage et d'accès à une composante du média.

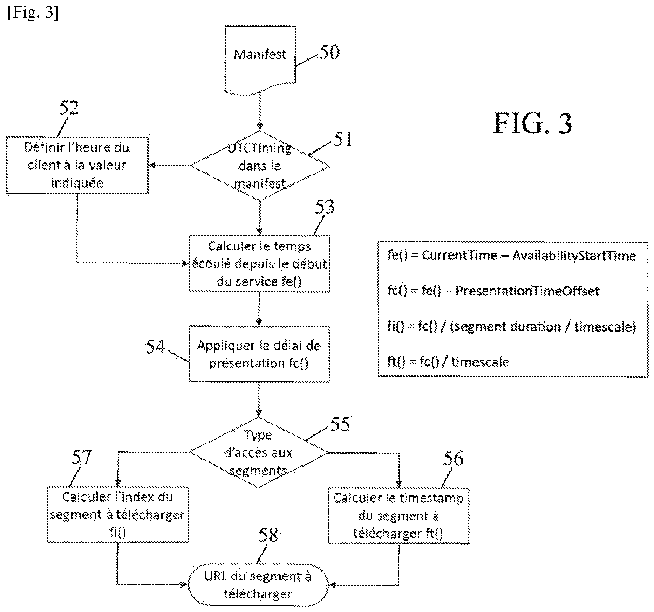

La figure 3 illustre un exemple de procédé de lecture de contenu live par un client de lecture vidéo (ou un lecteur vidéo). Le procédé illustré utilise certaines des informations décrites ci-dessus pour l'exemple de manifeste illustré sur la figure 2a pour déterminer le segment de données à télécharger pour chaque « AdaptationSet » de la période courante, et ainsi permettre au client de s'accrocher au contenu à lire.

La lecture d'un contenu live mis au format MPEG-DASH est principalement linéaire. Lors de sa connexion au serveur de contenus, le client récupère dans un premier temps le manifeste contenant des informations propres au contenu distribué en mode dynamique (« live »), puis commence la lecture à l'endroit du contenu correspondant à l'heure courante (afin de suivre un événement se déroulant en temps réel (ou live)). Pour ce faire, il détermine la période courante en calculant le temps écoulé depuis la valeur « availabilityStartTime » indiquée dans le manifeste, puis détermine le numéro du segment « live » dans cette période par le même moyen.

En référence à la figure 3, dans un ou plusieurs modes de réalisation, le client obtient (50) un manifeste correspondant au contenu live à lire, puis se synchronise (51) (52) avec un serveur de contenus multimédia par l'intermédiaire de la valeur de l'attribut « UTCtiming » indiquée dans le manifeste.

A partir de l'attribut « availabilityStartTime » et de l'heure courante (« CurrentTime »), le client peut ensuite déterminer (53) le temps écoulé fe() depuis le démarrage du contenu multimédia live. Comme discuté ci-dessus, suivant les conditions d'encodage, un délai (« PresentationTimeOffset ») peut être appliqué (54) sur la transmission du contenu multimédia afin de laisser du temps à l'encodeur pour encoder les segments, ce qui conduit à la détermination d'un temps fc() défini par fe() - PresentationTimeOffset. Enfin, en fonction de la taille des segments (« segment duration ») définie dans le manifeste, et d'un paramètre d'échelle de temps («TimeScale »), un index (57) fi() ou un horodatage (56) (« TimeStamp ») ft() du segment de l'heure courante pourra être calculé, selon le type de segment (55). A partir de ces informations, le client peut obtenir (58) une adresse de téléchargement (par exemple une URL (de l'anglais « Uniform Resource Locator »)), puis télécharger le segment de l'heure courante du contenu multimédia. Un index du segment de l'heure courante pourra par exemple être obtenu en divisant la valeur fc() par la durée d'un segment (en anglais « segment duration ») divisée par la valeur d'échelle de temps (« timescale ») : fi()=fc()/(segment duration/timescale). Un horodatage du segment de l'heure courante pourra par exemple être obtenu en divisant la valeur fc() par la valeur d'échelle de temps (« timescale ») : ft()=fc()/timescale.

Les valeurs décrites ci-dessus sont fournies par le diffuseur au client par l'intermédiaire du manifeste. Le diffuseur de contenus peut en outre influer sur le comportement du client par d'autres biais que le manifeste que le client télécharge, notamment en insérant de la signalisation dans un segment de données. Ainsi, l'insertion d'un marqueur (par exemple sous la forme d'une « box ») spécifique identifié par une balise prédéterminée permet de communiquer au client des messages de contrôle. Par exemple, l'insertion d'une box « emsg » dans un segment de données permet d'indiquer au client qu'il doit recharger immédiatement le manifeste. Ainsi, un client configuré pour la lecture d'un fichier MP4 ou MPEG2 TS (de l'anglais « Transport Stream ») va parcourir (en anglais, « parse ») ce fichier (sous sa forme arborescente) pour y détecter toutes les informations présentes, dont notamment les informations de signalisation de requête de chargement du manifeste (par exemple signalée par une signalisation « emsg »). Il est ainsi possible de signaler un évènement non prévu qui doit être pris en compte le plus tôt possible en s'affranchissant de la valeur de l'attribut « minimumUpdatePeriod », qui est plutôt adaptée pour des modifications incrémentales du manifeste.

Plusieurs scénarios peuvent cependant venir interrompre la logique de diffusion d'un événement en mode dynamique décrite ci-dessus et illustrée par la figure 3, par exemple lorsqu'un basculement du client sur un contenu multimédia autre que celui en cours de lecture (correspondant à un manifeste dit « principal ») est voulu. Ces interruptions de lecture d'un contenu multimédia live peuvent par exemple correspondre à l'insertion de publicités ciblées, à des événements se déroulant également en temps réel comme par exemple un décrochage régional, ou encore à la diffusion d'un message d'alerte.

Le contexte autour du cas de figure d'une insertion de publicités ciblées est le suivant : Lors d'une coupure publicitaire dans un contenu distribué en mode dynamique (contenu « live »), des publicités par défaut sont présentes dans le flux de données initial, c'est-à-dire correspondant au contenu live en cours de lecture. Le fournisseur de contenu peut décider de rediriger les clients vers des publicités ciblés en fonction de leurs profils respectifs. Pour ce faire, la période courante indiquée dans le manifeste courant (correspondant au contenu live en cours de lecture) peut être clôturée, et une nouvelle période d'une durée égale à celle de la publicité initiale peut être insérée dans le manifeste courant, sous la forme d'un conteneur de description d'intervalle de temps (« Period » pour le cas d'un conteneur d'un manifeste au format DASH).

Ce conteneur de description d'intervalle de temps peut contenir des données de redirection (par exemple signalées dans un fichier xml par un lien de redirection de type « xlink », pour « XML Linking Language », type spécifié dans la recommandation W3C « W3C XLINK XML Linking Language (XLink) Version 1.1, W3C Recommendation ») vers un serveur de publicité qui, en fonction d'un profil de l'utilisateur du client retournera un nouveau manifeste permettant d'accéder à des publicités adaptées à cet utilisateur. Le client lira le contenu décrit par le conteneur de description d'intervalle de temps (« Period ») de ce nouveau manifeste pendant la durée de la période définie par le conteneur. A la fin de cette période, le client retournera au manifeste courant dans lequel la période de publicité aura aussi été clôturée et une nouvelle période live insérée sous la forme d'un autre conteneur de description d'intervalle de temps.

Le cas de figure du décrochage régional peut se rencontrer lorsqu'une chaine de télévision diffuse en temps réel des journaux télévisés nationaux qui décrochent ensuite à heures fixes sur des journaux télévisés régionaux, comme par exemple la chaine de télévision France 3. Ce cas d'usage est similaire à celui des publicités car la durée du décrochage est connue par avance. En revanche, on peut imaginer des décrochages régionaux de durées variables selon les régions.

Pour ce qui est des cas de figure de diffusion d'alertes, la réglementation prévoit des dispositifs devant permettre de diffuser des messages d'alertes en interrompant les programmes en cours. Ces messages peuvent être préenregistrés et donc de durée connue ou être produits en temps réel. Dans ce dernier cas, la durée de l'interruption n'est pas connue à l'avance.

Cependant, il s'avère que les cas de figure d'un basculement d'un premier contenu live vers un deuxième contenu live sans connaissance de la durée de l'interruption de lecture du premier contenu live ne peuvent être correctement gérés, comme expliqué ci-dessous.

En effet, ces bascules effectuées entre contenus multimédias sont provoquées par l'utilisation d'ordres de basculement de flux, appelés « *splicing* », provenant d'un équipement situé en amont de l'encodeur audio/vidéo. A la réception de ces ordres, l'unité de mise en forme modifie le manifeste courant (correspondant au contenu live en cours de lecture) pour signaler au client un changement.

Parmi ces ordres de basculement de flux, l'ordre de basculement vers un autre flux (« *splice out* ») indique au client qu'il doit basculer d'un flux primaire vers un flux secondaire, et l'ordre de basculement de retour (« *splice in* ») indique au client qu'il doit revenir au flux primaire.

La bascule d'un flux primaire live vers un flux secondaire live (les deux flux étant distribués en mode dynamique), dite « bascule *live-live* », présente des inconvénients qui sont détaillés ci-après.

La norme DASH prévoit un mécanisme pour basculer entre 2 contenus live, appelé chainage de manifestes (en anglais, « manifest chaining »), qui consiste à obliger le client DASH à accompagner le basculement d'un premier contenu live vers un deuxième contenu live par un basculement sur un nouveau manifeste, à partir d'un premier manifeste. Ce mécanisme impose ainsi au lecteur de basculer sur un manifeste secondaire, différent du manifeste en cours d'utilisation par le client (dit manifeste « primaire » ou manifeste « courant »), pour la mise en œuvre d'un basculement d'un premier flux live correspondant au manifeste primaire, vers un deuxième flux live, auquel le manifeste secondaire correspond. Cependant, le basculement d'un premier manifeste vers un deuxième manifeste présente quelques inconvénients, du point de vue de la continuité entre périodes successives (il est impossible de signaler la continuité de périodes en utilisant le manifest chaining tel que spécifié), du point de vue de la gestion des DRM (Digital Right Management) (comme l'URL du manifest change lors de la bascule, le client DASH devrait stocker la période d'origine afin de déterminer que la même configuration DRM peut être utilisée, ce qui est assez contraignant du point de vue du client DASH), et du point de vue de la gestion des jetons (tokens) d'authentification du serveur CDN (comme l'URL du manifest change lors de la bascule, le client DASH devrait stocker la période d'origine et l'URL après redirection afin de déterminer que la même URL est utilisée et donc ne pas refaire l'étape d'authentification auprès du CDN, ce qui est assez contraignant du point de vue du client DASH). En outre, lors de cette bascule le lecteur perd la connaissance du manifeste primaire, rendant compliqué, voire impossible, le retour au premier flux live lors de la fin de la période de basculement (par exemple lors de la fin de diffusion de l'alerte dans le cas de figure d'une diffusion d'alerte évoqué ci-dessus).

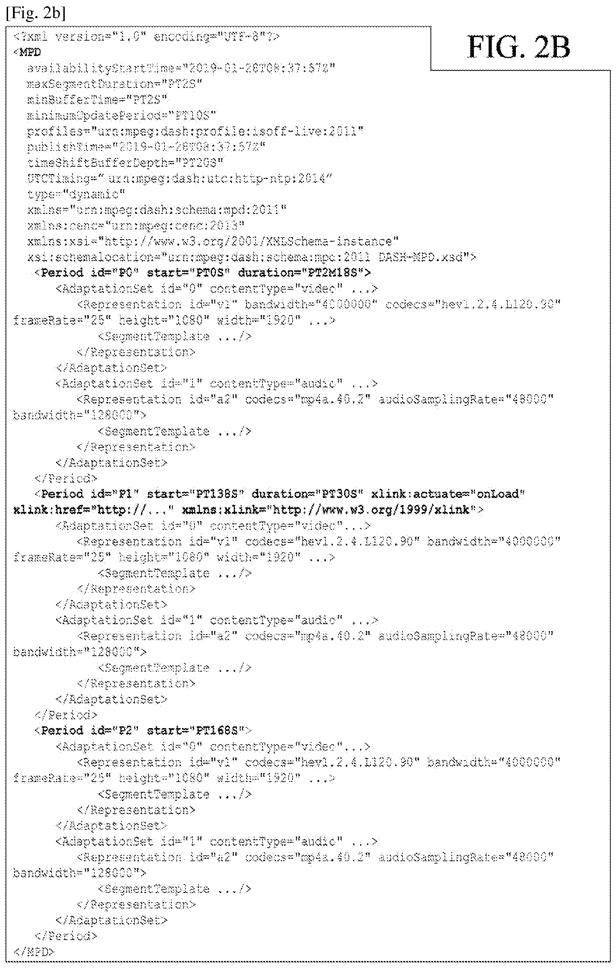

Il est possible d'utiliser pour la gestion d'une bascule d'un premier contenu vers un deuxième contenu des données de redirection (vers des données correspondant au deuxième contenu) insérée dans le manifeste, par exemple sous un élément définissant un intervalle de temps (non nécessairement borné) relatif au deuxième contenu. Dans le cas d'un manifeste au format DASH, un lien de redirection de type « xlink » peut ainsi être inséré dans un conteneur de type « Period », comme illustré sur la figure 2b. La spécification ISO/IEC 23009-1 « Information Technology - Dynamic adaptive streaming over HTTP (DASH) - Part 1 : Media presentation description and segment formats » définit l'insertion de lien de redirection de type xlink dans un manifeste au format DASH.

La figure 2b illustre ainsi un exemple de manifeste au format DASH après insertion d'une période pointant sur un autre contenu sous la forme d'un conteneur de type « Period » comprenant un lien xlink pointant vers un autre manifeste correspondant à cet autre contenu (notamment en ce qu'il contient des informations permettant d'accéder à cet autre contenu). Le manifeste illustré sur la figure 2b comprend trois périodes, chacune sous forme d'un conteneur de type « Period » : une première période « P0 », qui correspond à une période d'un premier contenu live, qui commence à l'instant 0 et qui dure 2 minutes et 18 secondes : «<Period id="P0" start="PT0S" duration="PT2M18S">".

Après 2 minutes et 18 secondes, un ordre de bascule (splice) est reçu et le manifeste est mis à jour en conséquence : la période courante est fermée et l'attribut de durée (« duration="PT2M18S" ») ajouté dans le manifeste. Une deuxième période (« P1 ») correspondant à un deuxième contenu, de durée 30s (correspondant par exemple à la durée d'un deuxième contenu d'une ou plusieurs publicités), commence à l'instant T0 + la durée de la période P0 (2minutes et 18 secondes) (start="PT138S"). Le lien xlink (xlink:actuate="onLoad"xlink:href="http://..." xmlns:xlink=http://www.w3.org/1999/xlink dans l'exemple illustré sur la figure 2b), inséré comme attribut supplémentaire du conteneur « Period » P1, permet d'accéder à ce deuxième contenu : « <Period id="P1" start="PT138S" duration="PT30S" xlink:actuate="onLoad" xlink:href="http://..." xmlns:xlink="http://www.w3.org/1999/xlink"> ». Sur lecture de ce lien xlink, le client résoudra le lien, c'est-à-dire accèdera à l'URL indiquée par le lien (dans l'exemple illustré dans la propriété « "xlink:href="http://..." xmlns:xlink=http://www.w3.org/1999/xlink») pour télécharger un deuxième manifeste contenant des données relatives à l'accès au deuxième contenu, puis extraira de ce deuxième manifeste une ou plusieurs périodes, sous la forme d'un ou plusieurs conteneurs « Period ». Ainsi, le client utilisera la redirection pour aller chercher des informations relatives à cette nouvelle période P1 via les informations accessibles par le lien xlink.

Une troisième période (conteneur « Period » « P2 ») correspond au retour au contenu initial suite à l'interruption de la période P1. Dans l'exemple de la figure 2b, cette période correspond au premier contenu live et n'a donc pas de durée spécifiée : « <Period id="P2" start="PT168S"> ».

Toutefois, un problème a été identifié, qui empêcherait le bon déroulement d'une bascule live-live (d'un premier contenu live auquel est associé un premier manifeste vers un deuxième contenu live auquel est associé un deuxième manifeste) qui utiliserait un mécanisme de redirection (par exemple un lien de redirection de type xlink) pour signaler la cible de la bascule tel que spécifié dans la spécification ISO/IEC 23009-1 mentionnée ci-dessus. En effet, les informations de synchronisation temporelle nécessaires au client pour obtenir les segments du deuxième contenu live seront présentes au niveau de l'élément racine du deuxième manifeste (élément MPD dans le format DASH), comme décrit ci-dessus en lien avec les figure 2a et 2b, mais pas au niveau de chaque conteneur définissant un intervalle de temps (non nécessairement borné) relatif au deuxième contenu. Le standard ISO/IEC 23009-1 spécifie que la résolution d'un lien xlink inséré dans un conteneur de description d'intervalle de temps (définissant une période), c'est-à-dire le téléchargement du manifeste à l'adresse indiquée par le lien xlink et l'extraction de la ou des périodes (conteneurs d'intervalle de temps) de ce manifeste, doit retourner non pas le manifeste complet, mais seulement la ou les périodes concernées (plusieurs périodes du manifeste distant (deuxième manifeste) pouvant venir se substituer par résolution du lien xlink à une période du manifeste initial (premier manifeste)). Ainsi, la résolution d'un lien de redirection xlink inséré dans un conteneur de description d'intervalle de temps (« Period ») telle que spécifiée dans le standard ISO/IEC 23009-1, ne permet pas au client d'obtenir des informations contenues dans le manifeste distant vers lequel le lien pointe autre que les informations contenues dans un conteneur de description d'intervalle de temps de ce manifeste distant. En particulier, le standard ne prévoit pas que le client puisse obtenir des éléments spécifiés par le standard comme devant être inclus sous la racine (MPD) du manifeste distant. La conséquence de cette limitation du standard est qu'à partir d'une seule période d'un contenu live (à partir uniquement des informations fournies dans un conteneur de définition d'intervalle de temps (par exemple de type « Period »)), un client n'est pas capable de savoir quand le flux (correspondant au deuxième contenu) a commencé, et ne peut donc pas déterminer quels sont les segments disponibles pour le deuxième contenu live (par exemple en utilisant le procédé décrit ci-dessus en lien avec la figure 3).

Aussi, tels qu'ils sont spécifiés actuellement, les liens de redirection de type xlinks permettent de couvrir le cas d'un décrochage depuis un premier contenu live vers un deuxième contenu non live (par exemple de type vod), pour revenir vers un contenu live, soit une séquence de basculement live->vod->live, mais pas le cas d'un basculement live-live, comprenant un décrochage depuis un premier contenu live vers un deuxième contenu live, pour éventuellement revenir vers le premier contenu live. En effet, la résolution d'un lien de redirection de type xlink permet au client DASH d'obtenir une ou plusieurs périodes (un conteneur de description d'intervalle de temps) de manifeste, et non pas un manifeste complet. Cela ne pose pas de difficulté lorsque le basculement a pour cible un deuxième contenu non live, pour lequel il n'est pas nécessaire au client d'obtenir des données permettant de déterminer quand le flux correspondant a commencé, afin de déterminer quels sont les segments disponibles, puisque le commencement et la durée du contenu non live sont prédéterminés. Par contre, les informations de timing permettant de calculer l'avancement du deuxième contenu live, qui ne sont présentes comme discuté ci-dessus qu'au niveau de la racine (MPD) du second manifeste, et non pas au niveau des éléments de ce second manifeste définissant des périodes temporelles, ne sont pas accessibles au client lorsque le basculement est effectué.

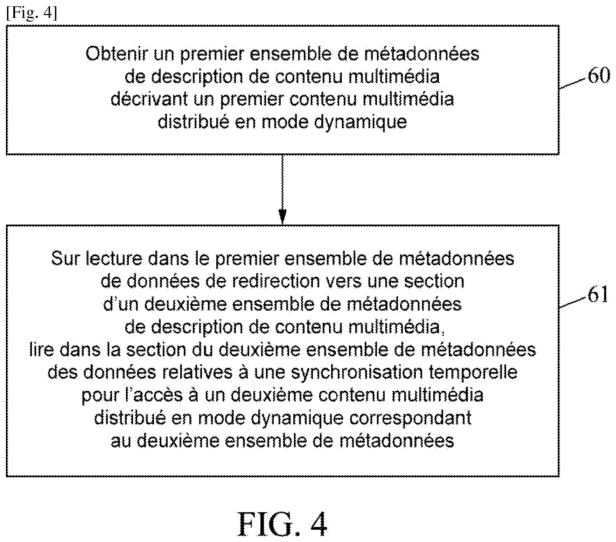

La figure 4 illustre le procédé proposé selon un ou plusieurs modes de réalisation. Ce procédé peut être mis en œuvre par tout dispositif comprenant un processeur et une mémoire, et configuré pour sa mise en oeuvre, tel que par exemple, un lecteur de contenus multimédia, un terminal, un équipement exécutant un client DASH ou un client configuré pour recevoir et lire des contenus multimédia selon tout autre protocole de distribution OTT de contenus multimédia, ou un équipement utilisateur (smartphone, tablette, ordinateur, etc.) équipé d'un lecteur de contenus multimédia.

Dans un ou plusieurs modes de réalisation, le dispositif configuré pour la mise en œuvre du procédé peut être configuré pour obtenir un premier ensemble de métadonnées de description de contenu décrivant un premier contenu multimédia distribué en mode dynamique (par exemple, pour un client DASH, un premier manifeste au format de protocole DASH, par exemple sous forme d'un fichier XML). Le premier ensemble de métadonnées peut décrire un premier contenu multimédia distribué en mode dynamique, par exemple par le biais de métadonnées relatives à un premier contenu multimédia distribué en mode dynamique comprises dans le premier ensemble.

Le dispositif peut en outre être configuré pour lire le premier ensemble de métadonnées, et pour, sur lecture dans le premier ensemble de métadonnées de données de redirection vers une section d'un deuxième ensemble de métadonnées de description de contenu, lire (61) dans la section du deuxième ensemble de métadonnées des données relatives à une synchronisation temporelle pour l'accès à un deuxième contenu multimédia distribué en mode dynamique.

Typiquement, le deuxième ensemble de métadonnées de description de contenu correspondra au deuxième contenu multimédia distribué en mode dynamique. Par exemple, ce deuxième ensemble pour décrire le deuxième contenu, par exemple par le biais de métadonnées relatives au deuxième contenu comprises dans le deuxième ensemble.

Ainsi, les données de redirection utilisées dans un premier manifeste permettent d'amener un dispositif, en cours de lecture de ce premier manifeste, à obtenir les données contenues dans une section spécifique d'un deuxième manifeste, dans le cours de la lecture du premier manifeste, c'est-à-dire sans changer de manifeste courant en lecture.

Cette possibilité de pouvoir récupérer des données dans un autre manifeste, sans toutefois changer de manifeste en cours de lecture, présente plusieurs avantages : du point de vue de la continuité entre périodes successives, le manifeste restant le même, seul le contenu de la période de basculement est remplacé. Il est donc possible de signaler la continuité de périodes. Du point de vue de la gestion des DRM, l'URL du manifest restant la même lors de la bascule, il est possible pour le dispositif (player) d'optimiser la configuration DRM lors du retour au flux principal. Du point de vue de la gestion des jetons (tokens) d'authentification CDN, l'URL du manifest restant la même lors de la bascule, il est possible pour le player de continuer à utiliser le même token d'authentification au CDN lors du retour au flux principal.

Il est donc particulièrement intéressant d'utiliser des données de redirection pour effectuer un basculement d'un premier contenu vers un deuxième contenu, y compris dans le cas de figure où les premier et deuxième contenus sont distribués en mode dynamique (cas où le premier contenu est un contenu live, et le deuxième contenu est aussi un contenu live).

Dans un ou plusieurs modes de réalisation, les données relatives à une synchronisation temporelle pour l'accès au deuxième contenu multimédia distribué en mode dynamique sont lues, dans le deuxième ensemble de métadonnées de description de contenu, dans un conteneur de description d'intervalle de temps relatif au deuxième contenu multimédia.

Dans un ou plusieurs modes de réalisation, les données relatives à une synchronisation temporelle pour l'accès au deuxième contenu multimédia distribué en mode dynamique comprennent des données indiquant un horodatage de disponibilité du deuxième contenu multimédia.

Dans un ou plusieurs modes de réalisation, les données relatives à une synchronisation temporelle pour l'accès au deuxième contenu multimédia distribué en mode dynamique comprennent des données indiquant une information d'accessibilité de segments du deuxième contenu multimédia.

Dans un ou plusieurs modes de réalisation, les données relatives à une synchronisation temporelle pour l'accès au deuxième contenu multimédia distribué en mode dynamique correspondent, en tout ou partie, à des données relatives à une synchronisation temporelle fournies sous un élément racine du deuxième ensemble de métadonnées.

Dans un ou plusieurs modes de réalisation, les données relatives à une synchronisation temporelle pour l'accès au deuxième contenu multimédia distribué en mode dynamique comprennent des données indiquant un horodatage de disponibilité d'un premier segment du deuxième contenu, des données indiquant une durée commune utilisée dans la définition de débits associés au deuxième contenu et des données indiquant un horodatage de génération du deuxième ensemble de métadonnées et de sa publication sur un réseau de distribution de contenus multimédia. Dans un ou plusieurs modes de réalisation, ces données peuvent en outre comprendre l'un ou plusieurs parmi des données indiquant un type de distribution du deuxième contenu, des données indiquant un horodatage de génération d'un segment du deuxième contenu le plus ancien encore disponible, des données d'horloge et des données indiquant une durée d'un plus petit tampon de décalage temporel utilisé pour le deuxième contenu. Par exemple, dans le cas d'un manifeste DASH, les données de synchronisation temporelle insérées dans un conteneur « Period » (qui pourra être lu par un client DASH lors de la résolution d'un lien de redirection de type xlink) pourront comprendre au moins les éléments suivants : availabilityStartTime, minBufferTime et publishTime.

Comme expliqué ci-dessus, le basculement d'un premier contenu vers un deuxième contenu peut être géré au niveau d'un premier manifeste relatif au premier contenu (en cours de lecture) par l'utilisation d'un lien de redirection vers un deuxième manifeste relatif au deuxième contenu, par exemple signalé par un lien de redirection de type « xlink » pour le format DASH. Le basculement live-live, dans le cas où les premier et deuxième contenus sont distribués en mode dynamique, peut ainsi s'effectuer sans changement de manifeste.

Tel que spécifié par le document ISO/IEC 23009-1 3^{ème} édition, le lien de redirection vers un deuxième manifeste de type xlink pointe vers une section de ce deuxième manifeste, et non pas vers l'intégralité du deuxième manifeste. Ainsi, le client qui résout un lien xlink incorporé dans conteneur définissant un intervalle de temps (une « Period ») du premier manifeste, obtient une adresse du second manifeste (sur la base des informations fournies par le lien), puis télécharge la section du deuxième manifeste relative à la « Period », c'est-à-dire à l'intervalle de temps défini dans le premier manifeste. Ainsi, le client télécharge dans le deuxième manifeste des informations contenues dans un conteneur de description d'intervalle de temps indiqué par le lien de redirection, qui correspond à l'intervalle de temps du conteneur du premier manifeste qui comprend le lien de redirection (par exemple xlink).

Les informations de synchronisation temporelle nécessaires à l'accès au deuxième contenu pour l'intervalle de temps considéré n'étant disponibles qu'à la racine du deuxième manifeste, racine qui n'est pas lue par le client lors de la résolution d'un lien xlink, dans un ou plusieurs modes de réalisation, il est proposé d'inclure dans le conteneur de description d'intervalle de temps du deuxième manifeste (que le client vient lire lorsqu'il résout le lien de redirection) des informations de synchronisation temporelle pour l'accès au second contenu. Un basculement live live, du premier contenu multimédia distribué en mode dynamique vers le deuxième contenu multimédia distribué en mode dynamique pourra ainsi avantageusement être effectué en utilisant un lien de redirection, notamment dans le cadre du standard ISO/IEC 23009-1 3^{ème} édition en utilisant une redirection de type xlink.

Dans les modes de réalisation utilisant un mécanisme de redirection vers un deuxième contenu multimédia distribué en mode dynamique, le dispositif, parcourant le premier ensemble de métadonnées, pourra lire des données de redirection vers une section d'un deuxième ensemble de métadonnées de description de contenu(s) multimédia pour l'accès aux données d'un deuxième contenu multimédia distribué en mode dynamique. Le dispositif pourra être configuré pour, sur lecture de ces données de redirection, lire dans la section du deuxième ensemble de métadonnées de description de contenu(s) multimédia des données relatives à une synchronisation temporelle pour l'accès au deuxième contenu multimédia distribué en mode dynamique. Ces données relatives à la synchronisation temporelle pourront avantageusement être exploitées par le dispositif pour l'accès au deuxième contenu live, palliant ainsi à l'absence d'informations de timing, notamment permettant de calculer l'avancement du deuxième contenu live, au niveau du conteneur de description d'intervalle de temps (de l'élément (« Period »)) du deuxième ensemble de métadonnées, conteneur vers lequel un lien de redirection de type xlink inséré dans un conteneur de description d'intervalle de temps du premier ensemble pointera (tel que spécifié par le standard ISO/IEC 23009-1 3^{ème} édition).

Ainsi, le procédé proposé permet avantageusement, dans le cadre du standard ISO/ IEC 23009-1, l'utilisation d'un lien de redirection de type xlink pour effectuer un basculement live live, c'est-à-dire un basculement en lecture d'un premier contenu multimédia distribué en mode dynamique vers un deuxième contenu multimédia distribué en mode dynamique, en insérant dans un conteneur de description d'intervalle de temps d'un deuxième manifeste que le client viendra lire lors de la résolution d'un lien xlink inséré dans un conteneur de description d'intervalle de temps d'un premier manifeste, des données de synchronisation temporelle pour l'accès au deuxième contenu distribué en mode dynamique.

Dans un ou plusieurs modes de réalisation, le dispositif pourra, en outre, obtenir une mise à jour du premier ensemble de métadonnées de description de contenu à l'expiration d'une période de temps correspondant à la durée du deuxième contenu multimédia live, ce afin d'éventuellement rebasculer sur le premier contenu live une fois la période de lecture du deuxième contenu live expirée.

Dans un ou plusieurs modes de réalisation, les données relatives à une synchronisation temporelle pour l'accès au deuxième contenu multimédia distribué en mode dynamique peuvent être insérées dans une section du deuxième ensemble de métadonnées de description de contenu(s) multimédia vers laquelle le lien de redirection inséré dans le premier ensemble de métadonnées pointe, de sorte que ces données soient lues (en tant que données de la section du deuxième ensemble) lors de la résolution du lien par un dispositif en cours de lecture du premier ensemble de métadonnées. Dans un ou plusieurs modes de réalisation, la section du deuxième ensemble de métadonnées de description de contenu(s) multimédia dans laquelle des données relatives à une synchronisation temporelle pour l'accès au deuxième contenu multimédia distribué en mode dynamique sont insérées correspond à un conteneur de description d'intervalle de temps relatif au deuxième contenu multimédia. Il peut s'agir par exemple d'un conteneur correspondant à l'attribut ou l'élément « Period » (décrit ci-dessus) dans un manifeste de format spécifié par le standard ISO/IEC 23009-1. Ainsi, ces données peuvent être avantageusement prises en compte lors d'une lecture linéaire par le dispositif du conteneur de description d'intervalle de temps du deuxième manifeste, sur lecture d'une information de redirection insérée dans un conteneur de description d'intervalle de temps du premier manifeste.

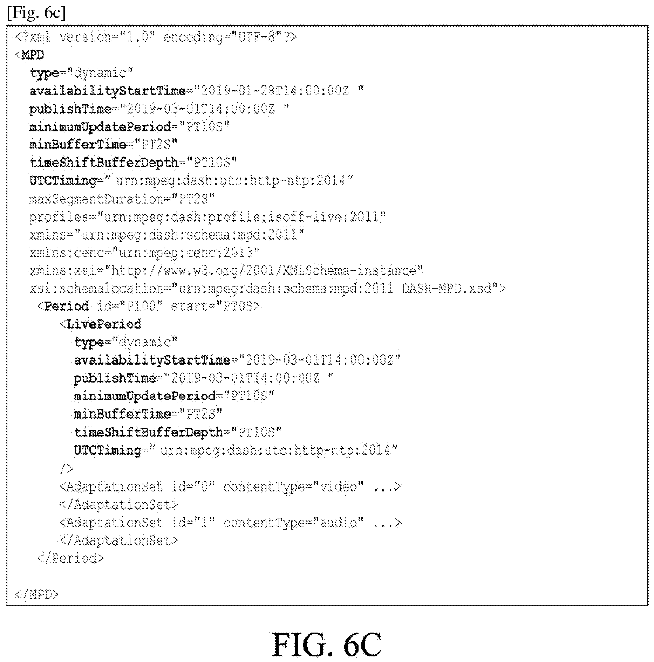

Dans un ou plusieurs modes de réalisation, les données de timing insérées dans la section du deuxième manifeste peuvent être regroupées au sein d'un conteneur spécifique, par exemple intitulé « LivePeriod », et repéré dans le manifeste par des balises correspondantes (« LivePeriod » pour le début du conteneur, et « /LivePeriod » pour la fin du conteneur), par exemple selon la syntaxe XML. Un exemple de conteneur LivePeriod tel que proposé dans un ou plusieurs modes de réalisation est illustré par la figure 6C.

Dans un ou plusieurs modes de réalisation, les données relatives à une synchronisation temporelle pour l'accès au deuxième contenu multimédia distribué en mode dynamique peuvent comprendre des données indiquant un horodatage de disponibilité du deuxième contenu multimédia. Par exemple, ces données peuvent comprendre des informations de synchronisation temporelle qui permettront au client de savoir quand le flux live correspondant au deuxième contenu a commencé.

Dans un ou plusieurs modes de réalisation, les données relatives à une synchronisation temporelle pour l'accès au deuxième contenu multimédia distribué en mode dynamique peuvent comprendre des données indiquant une information d'accessibilité de segments du deuxième contenu multimédia. Par exemple, ces données peuvent comprendre des informations de synchronisation temporelle qui permettront au client de savoir quels sont les segments correspondant au deuxième contenu actuellement accessibles.

Dans un ou plusieurs modes de réalisation, les types de données relatives à une synchronisation temporelle pour l'accès au deuxième contenu multimédia distribué en mode dynamique pourront correspondre à certains au moins des types de données relatifs à une synchronisation temporelle fournis sous un élément racine du deuxième ensemble de métadonnées.

Par exemple, la syntaxe des manifestes DASH pourra être enrichie en insérant une copie des informations de temps nécessaires au client DASH pour accrocher le flux en cours et qui sont fournies à la racine du deuxième manifeste, dans un nouveau conteneur (ou élément) ajouté au niveau de l'élément (conteneur) de description d'intervalle de temps pour le deuxième contenu live.

Dans un ou plusieurs modes de réalisation, les données relatives à une synchronisation temporelle pour l'accès au deuxième contenu multimédia distribué en mode dynamique peuvent comprendre des données indiquant un type du deuxième contenu, et l'un au moins parmi des données indiquant un horodatage de disponibilité d'un premier segment du deuxième contenu, des données indiquant un horodatage de génération d'un segment du deuxième contenu le plus ancien encore disponible, et des données indiquant une durée commune utilisée dans la définition de débits associés au deuxième contenu, des données d'horloge, et des données indiquant une durée d'un plus petit tampon de décalage temporel utilisé pour le deuxième contenu.

Par exemple, en utilisant le format DASH, un nouvel élément (par exemple dénommé « LivePeriod ») pourra être ajouté au niveau de l'élément « Period », et comprendre des informations de temps qui permettront au récepteur de savoir quand ce flux a commencé et quels sont les segments actuellement accessibles. Dans un mode de réalisation, le nouvel élément « LivePeriod » pourra contenir des éléments parmi les éléments "type", "availabilityStartTime", "publishTime », « availabilityEndTime », « minimumUpdatePeriod", "minBufferTime", "timeShiftBufferDepth" et "UTCTiming" pour indiquer au récepteur qu'il s'agit d'un flux live, quand ce flux a commencé et quels sont les segments actuellement accessibles.

Dans un mode de réalisation où un basculement d'un premier contenu live vers un deuxième contenu live est opéré sur résolution d'un lien xlink dans un manifeste au format DASH, le type de contenu sera dynamique (distribution en mode dynamique pour un contenu live) (type=dynamic), et le nouvel élément proposé pourra contenir au moins les éléments "availabilityStartTime", "publishTime » et "minBufferTime", conformément à la spécification DASH (ISO/IEC 23009-1), section 5.3.1.2 table 5.1, qui spécifie que les éléments suivants sont obligatoires en mode dynamic : availabilityStartTime, minBufferTime et publishTime. Les autres éléments pourront ne pas être présents parmi les données relatives à une synchronisation temporelle insérées dans la section du deuxième manifeste qui sera lue par le client lors de la résolution de données de redirection lues dans un premier manifeste. Il en est de même pour l'élément de syntaxe <LivePeriod>, qui pourra ne pas être présent dans un ou plusieurs modes de réalisation.

Dans un ou plusieurs modes de réalisation, les données relatives à une synchronisation temporelle insérées dans la section du deuxième manifeste qui sera lue par le client lors de la résolution de données de redirection lues dans un premier manifeste comprendront les données spécifiées comme obligatoires, par le standard applicable, pour l'accès à un contenu distribué en mode dynamique dans l'ensemble de métadonnées correspondant.

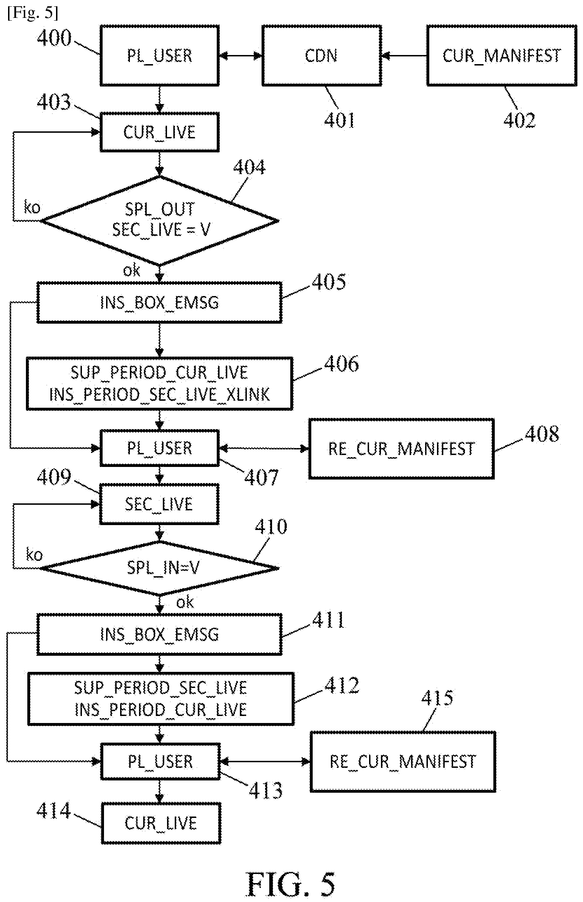

La figure 5 illustre un exemple de mise en œuvre du procédé proposé selon un ou plusieurs modes de réalisation.

Ainsi, comme précédemment, un client DASH souhaitant lire une séquence vidéo distribuée en mode dynamique (ou flux live courant) effectue dans un premier temps une requête auprès d'un réseau de diffusion de contenu (CDN) (401) afin d'obtenir (402) le manifeste (ensemble de métadonnées de description) du flux live courant, en fournissant des informations d'authentification. Le CDN exécute une procédure d'authentification du client et, en cas de succès, lui retourne un jeton (en anglais, « token ») et le redirige vers une adresse réseau (par exemple une URL) à laquelle le manifeste courant (correspondant au flux live courant) est accessible. client. Le client DASH 200 peut ainsi se raccrocher au flux live courant (403). Afin de pouvoir se raccrocher correctement au flux live courant, le client DASH détermine, à partir des informations contenues dans le manifeste courant, par exemple en utilisant le procédé illustré par la figure 3, le segment qu'il doit télécharger selon l'heure courante et le temps écoulé pour se raccrocher au flux courant, par exemple en déterminant un index de ce segment ou un horodatage comme décrit ci-dessus.

Une fois que le client DASH est accroché au flux courant (404), il lit en continu (404, ko) ce flux courant, en l'absence de demande d'ordre de bascule « splice out » client.

Lors de la réception par le packager d'un ordre de « splice out » (404, ok), le packager insère une signalisation requérant un basculement (« box Emsg ») dans le dernier segment de données du flux live courant (405) avant la date de bascule. Cette « box » permet d'indiquer au client DASH 407 (400) qu'il doit recharger immédiatement le manifeste courant associé au flux live courant. Dans le même temps, et avant le rechargement du manifeste courant, le packager supprime la période (« SUP_PERIOD_CUR_LIVE ») du flux live courant et viens insérer la ou les périodes du flux live secondaire (INS_PERIOD_SEC_LIVE_XLINK) par l'intermédiaire d'un lien « xlink ». Un lien « xlink » permet d'indiquer une cible de la bascule au manifeste. Lors de l'utilisation d'un lien « xlink », une période est retournée venant remplacer la période en cours du manifeste contenant le lien « xlink ».

Afin d'insérer la période du flux live secondaire, un élément enfant du MPD, appelé « LivePeriod », est ajouté dans l'élément « Period » du manifeste secondaire que le client DASH viendra lire lors de la résolution du lien xlink, afin que le client DASH puisse accrocher le flux live secondaire à l'heure courante. Pour cela, l'élément « LivePeriod » est composé d'attributs permettant de venir calculer le segment de la période courante que le lecteur 407 (400) doit récupérer pour accrocher le flux live secondaire sans l'apparition d'un retard temporel. Ce calcul est équivalent à celui présenté précédemment à la figure 3. Les attributs de l'élément enfant « LivePeriod » peuvent être, dans un ou plusieurs modes de réalisation : type="dynamic" ; availabilityStartTime ; publishTime ; availabilityEndTime ; minimumUpdatePeriod ; minBufferTime ; timeShiftBufferDepth et UTCTiming.

Lors du rechargement du manifeste courant 408, le client DASH 407 va ainsi charger le lien « xlink » et résoudre le lien, c'est-à-dire accéder aux données vers lesquelles le lien pointe. A partir de ces données, le lecteur va calculer et déterminer le segment de la période courante à récupérer pour accrocher sans retard temporel le flux live secondaire (409).

Si la durée du flux live secondaire est inconnue, « 410 ko », le lecteur continue la lecture du flux live secondaire tant qu'aucun ordre de « splice in » n'est demandé.

A l'arrivée d'une demande de « splice in », c'est à dire une demande de retour au flux live courant, une « box Emsg » (411) dans le dernier segment de données du flux live secondaire avant la date de la bascule est introduite par le packager. Comme précédemment, cette « box » a pour objet d'indiquer au client DASH 412 qu'il doit recharger le manifeste courant.

Dans le même temps, et avant le rechargement du manifest courant, le packager supprime la période (« period ») du flux live secondaire et viens insérer la période du flux live courant (412) par l'intermédiaire des informations (attributs) du manifest courant toujours disponible à la racine du MPD. Lors du rechargement du manifest courant (415), le client DASH 412 (407 ; 400) se raccroche au flux live courant sans retard temporel.

Sans les dispositions précédentes, c'est-à-dire un élément enfant « LivePeriod », il n'est pas possible lors de l'utilisation d'un lien « xlink » d'attendre un flux live secondaire car les informations permettant le calcul du segment à télécharger pour accrocher le flux live secondaire à l'heure courante ne sont pas disponibles dans un lien « xlink ». En effet, comme expliqué précédemment et illustré figure 3, le calcul permettant de déterminer le segment à télécharger utilise des informations (attributs) qui ne sont disponibles qu'à la racine du manifest. Lors de l'utilisation d'un « xlink », la période du flux/séquence vidéo principale est remplacée par la ou les périodes at-teignables par le lien « xlink », et correspondant à une autre séquence vidéo, comme de la publicité par exemple. L'élément enfant « Period » permettant le remplacement d'une période par une autre ne possède pas d'attributs qui permettent le calcul du segment à télécharger afin d'accrocher une séquence vidéo qui se déroule en temps réel.

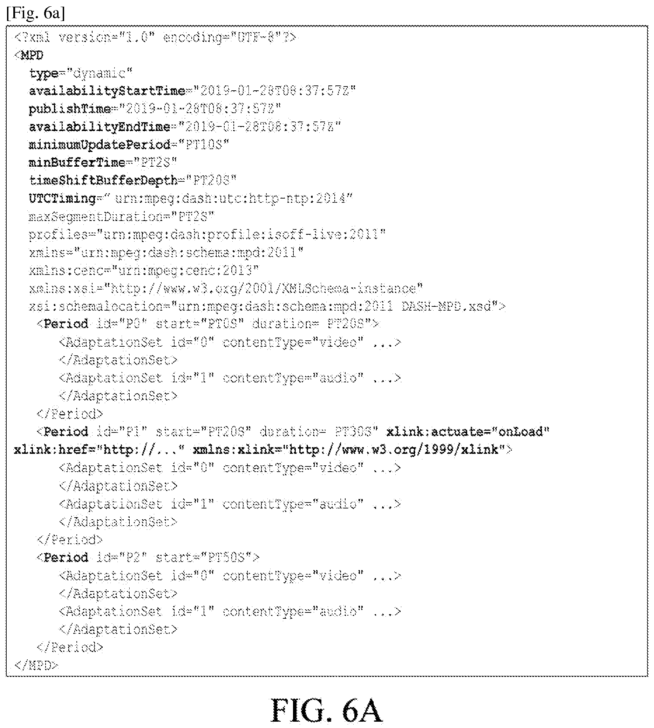

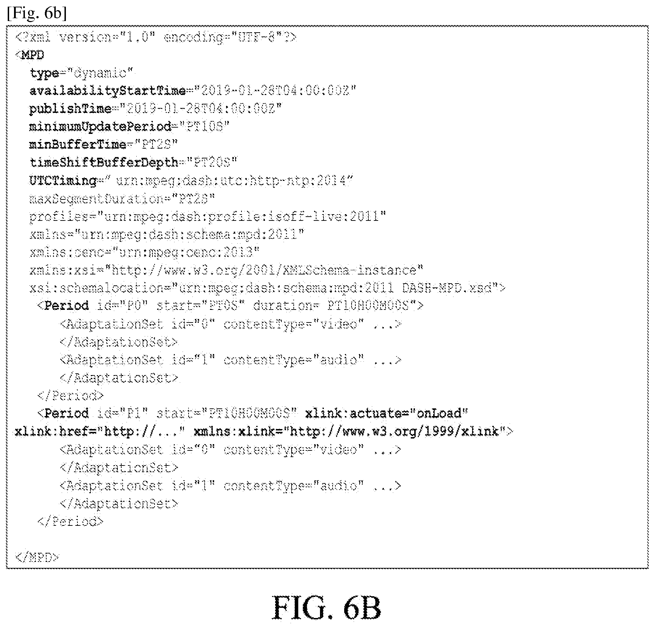

Les figures 6a, 6b et 6c illustrent des manifestes utilisant une indication de redirection pour une insertion de contenu VOD dans un flux live (figure 6a), et pour un décrochage vers un flux live secondaire à partir d'un flux live principal (figures 6b et 6c).

En référence à la figure 6a, la période P0 est la période initiale du contenu live, elle démarre à T0 et sa durée correspond au temps avant le splice out. La période P1 est la période de décrochage, sa durée est fixe et connue à l'avance, elle est insérée dans le manifest en même temps que la période de retour au live afin de permettre au player de précharger les segments. La résolution du xlink permet d'obtenir les informations liées à cette période afin de les substituer à celles présentes dans le manifest. La période P2 est la période de retour au contenu initial, elle démarre à la somme des durées des périodes précédentes et sa durée n'est pas connue.

La figure 6b fournit une illustration d'un exemple de premier manifeste incluant un lien de redirection pointant vers une section d'un deuxième manifeste, et la figure 6c un exemple de deuxième manifeste amélioré selon le procédé proposé.

En référence à la figure 6b, la période P0 est la période initiale du contenu live, elle démarre à T0 et sa durée correspond au temps avant le splice out, comme décrit précédemment en lien avec la figure 6a.

A la différence du manifeste illustré sur la figure 6a, la période P1 du manifeste illustré sur la figure 6b est une période de décrochage correspondant à un contenu live dont on ne sait pas quand il a commencé. L'exemple de lien de redirection du premier manifeste illustré sur la figure 6b (xlink:actuate="onLoad" xlink:href="http://..." xmlns:xlink=http://www.w3.org/1999/xlink) inclus dans le conteneur de description d'intervalle de temps <Period id="P1" start="PT10H00M00S" xlink:actuate="onLoad" xlink:href="http://..." xmlns:xlink="http://www.w3.org/1999/xlink"> <AdaptationSet id="0" contentType="video" ...> </AdaptationSet> <AdaptationSet id="1" contentType="audio" ...> </AdaptationSet>, </Period>, peut par exemple pointer vers le deuxième manifeste illustré sur la figure 6c.

En référence à la figure 6c, la résolution du lien de redirection (xlink) pour lire le deuxième manifeste vers lequel il pointe permet d'obtenir les informations de timing (de synchronisation temporelle) liées à la période définie par le conteneur « Period » du second manifeste (illustré sur la fig. 6b) dans lequel le lien de redirection est inséré. Afin de permettre au client d'accéder aux segments du contenu auquel correspond le deuxième manifeste, un nouveau conteneur (nouvel élément (« LivePeriod »)) est ajouté au niveau du conteneur de description d'intervalle de temps (de l'élément « Period ») vers lequel le lien de redirection (xlink) du premier manifeste (fig. 6b) pointe : « <LivePeriod type="dynamic" availabilityStartTime="2019-03-01T14:00:00Z" publishTime="2019-03-01T14:00:00Z " minimumUpdatePeriod="PT10S" minBufferTime="PT2S" timeShiftBufferDepth="PT10S" UTCTiming=" urn:mpeg:dash:utc:http-ntp:2014" />. Il comprend les informations de temps qui permettront au récepteur de savoir quand ce flux a commencé et quels sont les segments actuellement accessibles. La figure 6c illustre un exemple de conteneur proposé (« LivePeriod ») comprenant les types de données suivants : type ; availabilityStartTime ; publishTime ; minimumUpdatePeriod ; minBufferTime ; timeShiftBufferDepth ; UTCTiming, avec des exemples de valeurs pour chacun de ces types de données.

L'homme du métier comprendra que, bien que ces exemples et illustrations correspondent au standard du document ISO/IEC 23009-1, ces exemples et illustrations ne sont pas limitatifs, et le procédé proposé peut être mis en œuvre dans d'autres cadres, en particulier dans le cadre d'autres standards, et/ou en utilisant des formats et des syntaxes différentes.

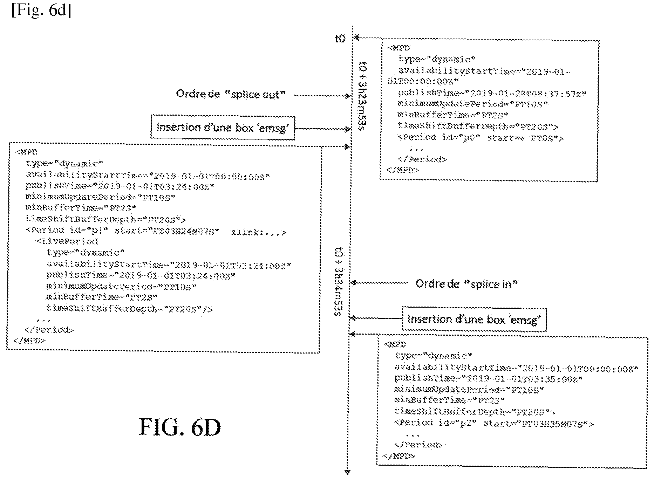

La figure 6d est un diagramme temporel illustrant un décrochage live1 vers live 2 puis retour vers live 1 effectué selon un ou plusieurs modes de réalisation.

A l'état initial, le manifeste ne contient qu'une seule période correspondant au flux live primaire. A l'arrivée d'un ordre de splice out le packageur effectue les opérations suivantes : Insertion d'une box 'emsg' dans le dernier segment de data du flux principal avant la date de la bascule. Cette box indiquera au client DASH qu'il doit recharger immédiatement le manifeste. Suppression de la période du live principal du manifeste et insertion de la période du live secondaire avec le lien xlink. La résolution de ce lien xlink permettra au client DASH d'obtenir les informations relatives à la ou les périodes du flux secondaire et de commencer le décodage.

La durée du flux live secondaire n'étant pas connue, le client DASH continue la lecture de ce flux tant qu'il ne reçoit pas d'autres informations.

A l'arrivée d'un ordre de splice in, le packageur effectue les opérations suivantes : Insertion d'une box 'emsg' dans le dernier segment de data du flux secondaire avant la date de la bascule. Cette box indiquera au client DASH qu'il doit recharger immédiatement le manifeste. Suppression de la période du live secondaire du manifeste et insertion de la période du live primaire. Le client DASH dispose déjà des informations concernant le flux primaire et peut donc reprendre le décodage.

Cette phase de retour au live principal nécessite que les ordres de splicing soient synchronisés entre le packageur principal et le secondaire.

Retour au flux primaire : Dans le cas d'une bascule vers un flux live secondaire, le client doit commencer la lecture dès la signalisation de la bascule. Cependant, si le client est décalé dans le temps par rapport au déroulement du live (time shift), il va attendre la fin de la période courante avant de basculer. Il ne pourra donc pas avoir accès au début du flux live secondaire. Ce phénomène n'est pas acceptable, en particulier pour des bascules de type alerte. Ce problème peut être résolu en insérant une box 'emsg' dans le segment vidéo précédant la bascule. Cette box indiquera au client DASH qu'il doit recharger le manifeste immédiatement, sans tenir compte de la valeur de l'attribut minimumUpdatePeriod. Dans le même temps, le packager aura supprimé la période du live principal du manifest, ne laissant que la période du live secondaire avec le xlink. Lors du rechargement du manifest, le client DASH n'aura donc pas d'autre choix que de démarrer sur la période du flux secondaire, et ce quel que soit sa position de lecture dans le buffer de time shift. Le même mécanisme sera utilisé pour forcer les clients DASH à retourner au flux principal. Le packageur insèrera une box emsg, supprimera la période du flux live secondaire du manifeste et ajoutera une période correspondant au flux live principal.

Ainsi, le procédé proposé ouvre avantageusement la possibilité d'utiliser des liens de type xlink dans un système utilisant le standard DASH pour effectuer un basculement d'un premier contenu distribué en mode dynamique vers un deuxième contenu lui aussi distribué en mode dynamique. Cela permet d'obtenir un nouveau mode pour opérer un basculement d'un premier contenu distribué en mode dynamique vers un deuxième contenu lui aussi distribué en mode dynamique, en bénéficiant, dans le cadre de ce basculement, des avantages que ce mode procure (notamment en termes de continuité entre périodes successives, de gestion des DRM et de gestion de l'authentification, comme discuté ci-dessus). Ces avantages peuvent faire défaut dans d'autres méthodes permettant d'effectuer un basculement d'un premier contenu distribué en mode dynamique vers un deuxième contenu lui aussi distribué en mode dynamique, comme par exemple les méthodes reposant sur un changement de manifeste.

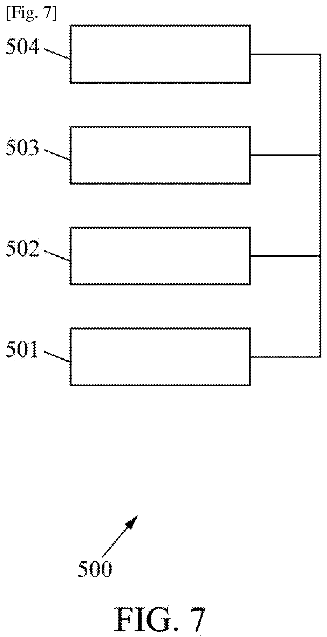

La figure 7 illustre un exemple d'architecture d'un dispositif de lecture de contenus multimédia distribués en mode dynamique pour la mise en œuvre du procédé proposé.

En référence à la figure 7, le dispositif 500 comprend un contrôleur 501, couplé de manière opérationnelle à une interface d'entrée 502 et à une mémoire 504, qui pilote une unité de lecture de contenus multimédia 503.

L'interface d'entrée 502 est configurée pour recevoir depuis un serveur de contenus, des segments de données (segments audio et/ou vidéo) correspondant à des contenus multimédia distribué en mode dynamique, ainsi que des ensembles de métadonnées correspondants à ces contenus.

Le contrôleur 501 est configuré pour piloter l'unité de lecture de contenus multimédia 503 pour la mise en œuvre d'un ou de plusieurs modes de réalisation du procédé proposé.

Le dispositif 500 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc. En fonction du mode de réalisation, la mémoire, l'unité de stockage de données ou le support de stockage amovible contient des instructions qui, lorsqu'elles sont exécutées par le contrôleur 501, amènent ce contrôleur 501 à effectuer ou contrôler les parties interface d'entrée 502, lecture de contenus multimédia 503 et/ou traitement de données des exemples de mise en œuvre du procédé proposé décrits dans les présentes. Le contrôleur 501 peut être un composant implémentant un processeur ou une unité de calcul pour la lecture de contenus multimédia selon le procédé proposé et le contrôle des unités 502, 503 et 504 du dispositif 500.

En outre, le dispositif 500 peut être mis en œuvre sous forme logicielle, comme décrit ci-dessus, ou sous forme matérielle, comme un circuit intégré spécifique application (ASIC), ou sous forme d'une combinaison d'éléments matériels et logiciels, comme par exemple un programme logiciel destiné à être chargé et exécuté sur un composant de type FPGA (Field Programmable Gate Array).

## Revendications

1. Procédé de gestion de contenus multimédia, comprenant :
obtenir (60) un premier ensemble de métadonnées de description de contenu décrivant un premier contenu multimédia distribué en mode dynamique ; et
sur lecture dans le premier ensemble de métadonnées de données de lien de redirection vers une section d'un deuxième ensemble de métadonnées de description de contenu, lire (61), dans la section du deuxième ensemble de métadonnées des données relatives à une synchronisation temporelle pour l'accès au deuxième contenu multimédia distribué en mode dynamique, pour accéder au deuxième contenu,
dans lequel les premier et deuxième ensembles de métadonnées sont des manifestes au format « Dynamic adaptative streaming over HTTP », DASH.

2. Procédé selon la revendication 1, dans lequel le deuxième ensemble de métadonnées de description de contenu décrit le deuxième contenu multimédia distribué en mode dynamique.

3. Procédé selon l'une quelconque des revendications précédentes, dans lequel les données relatives à une synchronisation temporelle pour l'accès au deuxième contenu multimédia distribué en mode dynamique sont lues, dans le deuxième ensemble de métadonnées de description de contenu, dans un conteneur de description d'intervalle de temps relatif au deuxième contenu multimédia.

4. Procédé selon l'une quelconque des revendications précédentes, dans lequel les données relatives à une synchronisation temporelle pour l'accès au deuxième contenu multimédia distribué en mode dynamique comprennent des données indiquant un horodatage de disponibilité du deuxième contenu multimédia.

5. Procédé selon l'une quelconque des revendications précédentes, dans lequel les données relatives à une synchronisation temporelle pour l'accès au deuxième contenu multimédia distribué en mode dynamique comprennent des données indiquant une information d'accessibilité de segments du deuxième contenu multimédia.

6. Procédé selon l'une quelconque des revendications précédentes, dans lequel les données relatives à une synchronisation temporelle pour l'accès au deuxième contenu multimédia distribué en mode dynamique correspondent à des données relatives à une synchronisation temporelle fournies sous un élément racine du deuxième ensemble de métadonnées.

7. Procédé selon l'une quelconque des revendications précédentes, dans lequel les données relatives à une synchronisation temporelle pour l'accès au deuxième contenu multimédia distribué en mode dynamique comprennent des données indiquant un horodatage de disponibilité d'un premier segment du deuxième contenu, des données indiquant une durée commune utilisée dans la définition de débits associés au deuxième contenu et des données indiquant un horodatage de génération du deuxième ensemble de métadonnées et de sa publication sur un réseau de distribution de contenus multimédia.

8. Dispositif (500) de lecture de contenu multimédia, comprenant un processeur (501) et une mémoire (504) couplée de manière opérationnelle au processeur (501), dans lequel le processeur (501) est configuré pour la mise en œuvre d'un procédé selon l'une quelconque des revendications 1 à 7.

9. Programme d'ordinateur, chargeable dans une mémoire associée à un processeur, et comprenant des portions de code pour la mise en œuvre des étapes d'un procédé selon l'une quelconque des revendications 1 à 7 lors de l'exécution dudit programme par le processeur.

10. Ensemble de données représentant, par exemple par voie de compression ou d'encodage, un programme d'ordinateur selon la revendication 9.

## Patentansprüche

1. Verfahren zur Verwaltung von Multimedia-Inhalten, umfassend:
Erhalten (60) eines ersten Satzes von inhaltsbeschreibenden Metadaten, die einen ersten in dem dynamischen Modus verteilten Multimedia-Inhalt beschreiben; und
bei dem Lesen in den ersten Satzes von Metadaten von Weiterleitungsdaten zu einem Abschnitt eines zweiten Satzes von inhaltsbeschreibenden Metadaten, Lesen (61), in dem Abschnitt des zweiten Satzes von Metadaten, von Daten bezüglich einer Zeitsynchronisierung für den Zugriff auf den zweiten in dem dynamischen Modus verteilten Multimedia-Inhalt, um auf den zweiten Inhalt zuzugreifen,
wobei der erste und der zweite Satz von Metadaten Manifeste in dem Format "Dynamic adaptive streaming over HTTP", DASH, sind.

2. Verfahren nach Anspruch 1, wobei der zweite Satz von inhaltsbeschreibenden Metadaten den zweiten in dem dynamischen Modus verteilten Multimedia-Inhalt beschreibt.

3. Verfahren nach einem der vorhergehenden Ansprüche, wobei die Daten bezüglich einer Zeitsynchronisation für den Zugriff auf den zweiten im dynamischen Modus verteilten Multimedia-Inhalt in dem zweiten Satz von inhaltsbeschreibenden Metadaten in einem zeitintervallbeschreibenden Container für den zweiten Multimedia-Inhalt gelesen werden.

4. Verfahren nach einem der vorhergehenden Ansprüche, wobei die Daten bezüglich einer Zeitsynchronisation für den Zugriff auf den zweiten im dynamischen Modus verteilten Multimedia-Inhalt Daten umfassen, die einen Zeitstempel für die Verfügbarkeit des zweiten Multimedia-Inhalts anzeigen.

5. Verfahren nach einem der vorhergehenden Ansprüche, wobei die Daten bezüglich einer Zeitsynchronisation für den Zugriff auf den zweiten im dynamischen Modus verteilten Multimedia-Inhalt Daten umfassen, die eine Information über die Erreichbarkeit von Segmenten des zweiten Multimedia-Inhalts anzeigen.

6. Verfahren nach einem der vorhergehenden Ansprüche, wobei die Daten bezüglich einer Zeitsynchronisation für den Zugriff auf den zweiten im dynamischen Modus verteilten Multimedia-Inhalt Daten bezüglich einer Zeitsynchronisation entsprechen, die unter einem Wurzelelement des zweiten Satzes von Metadaten bereitgestellt werden.

7. Verfahren nach einem der vorhergehenden Ansprüche, wobei die Daten bezüglich einer Zeitsynchronisation für den Zugriff auf den zweiten im dynamischen Modus verteilten Multimedia-Inhalt Daten, die einen Zeitstempel für die Verfügbarkeit eines ersten Segments des zweiten Inhalts angeben, Daten, die eine gemeinsame Dauer angeben, die bei der Definition von mit dem zweiten Inhalt verbundenen Durchsätzen verwendet wird, und Daten umfassen, die einen Zeitstempel für das Erzeugen des zweiten Satzes von Metadaten und dessen Veröffentlichung in einem Netzwerk zur Verteilung von Multimedia-Inhalten angeben.

8. Vorrichtung (500) zum Lesen von Multimedia-Inhalten, umfassend einen Prozessor (501) und einen Speicher (504), der betriebsbereit mit dem Prozessor (501) gekoppelt ist, wobei der Prozessor (501) zur Durchführung eines Verfahrens nach einem der Ansprüche 1 bis 7 konfiguriert ist.

9. Computerprogramm, das in einen mit einem Prozessor verbundenen Speicher geladen werden kann und Codeabschnitte für die Durchführung der Schritte eines Verfahrens nach einem der Ansprüche 1 bis 7 bei der Ausführung des Programms durch den Prozessor umfasst.

10. Datensatz, der beispielsweise durch Komprimierung oder Codierung ein Computerprogramm nach Anspruch 9 darstellt.

## Claims

1. A method for managing multimedia contents, comprising:
Obtaining (60) a first set of content description metadata describing a first multimedia content delivered in dynamic mode; and
upon reading, from the first set of metadata, redirect data for redirecting to a section of a second set of content description metadata, reading (61), from the section of the second set of metadata, data relative to a temporal synchronization of the access to a second multimedia content delivered in dynamic mode,
wherein the first and second sets of metadata are manifests in DASH format, DASH standing for dynamic adaptive streaming over HTTP.

2. The method as claimed in claim 1, wherein the second set of content description metadata describes the second multimedia content delivered in dynamic mode.

3. The method as claimed in either one of the preceding claims, wherein the data relative to a temporal synchronization for the access to the second multimedia content delivered in dynamic mode are read, from the second set of content description metadata, from a time-interval description container relative to the second multimedia content.

4. The method as claimed in any one of the preceding claims, wherein the data relative to a temporal synchronization for the access to the second multimedia content delivered in dynamic mode comprise data indicating a timestamp of availability of the second multimedia content.

5. The method as claimed in any one of the preceding claims, wherein the data relative to a temporal synchronization for the access to the second multimedia content delivered in dynamic mode comprise data indicating information on accessibility of segments of the second multimedia content.

6. The method as claimed in any one of the preceding claims, wherein the data relative to a temporal synchronization for the access to the second multimedia content delivered in dynamic mode correspond to data relative to a temporal synchronization that are provided in a root element of the second set of metadata.

7. The method as claimed in any one of the preceding claims, wherein the data relative to a temporal synchronization for the access to the second multimedia content delivered in dynamic mode comprise data indicating a timestamp of availability of a first segment of the second content, data indicating a common duration used in the definition of bit rates associated with the second content and data indicating a timestamp of generation of the second set of metadata and of its publication on a multimedia content delivery network.

8. A device (500) for playing multimedia content, comprising a processor (501) and a memory (504) that is operationally coupled to the processor (501), wherein the processor is configured to implement a method as claimed in any one of claims 1 to 7.

9. A computer program, which is loadable into a memory associated with a processor, and which comprises segments of code for implementing the steps of a method as claimed in any one of claims 1 to 7 on the execution of said program by the processor.

10. A data set representing, for example in compressed or encoded form, a computer program as claimed in claim 9.
